# DEMANDE DE BREVET EUROPEEN

(11) **EP 0 884 228 A1**
(43) Date de publication de la demande: **16.12.1998**
(21) Numéro de dépôt: 98401375.5
(22) Date de dépôt: 09.06.1998
(51) Int. Cl.: B60R 25/02

(54) **Antivol de véhicule automobile comportant des moyens perfectionnés d'immobilisation**

(30) Priorité: 09.06.1997 FR 9707217
(71) Demandeur: VALEO SECURITE HABITACLE, 94000 Créteil (FR)
(72) Inventeur: Garnault, Joel, 95110 Sannois (FR); Boulay, Jean-Claude, 94000 Créteil (FR)
(74) Mandataire: Gamonal, Didier

(57) **Abrégé**

L'invention concerne un antivol pour une colonne de direction de véhicule automobile comportant une roue dentée avec laquelle engrène un pignon (12) qui est susceptible d'être immobilisé en rotation autour de son axe (A1) pour assurer l'immobilisation de la colonne,
caractérisé en ce que le dispositif d'immobilisation (16) comporte au moins un bloc déformable élastique (28) de forme générale cylindrique et tubulaire qui est solidaire en rotation de la tige centrale (18) et qui est susceptible d'être déformé sous l'effet d'un serrage selon sa direction action axiale de telle sorte qu'une surface externe de révolution (38) du bloc déformable (28) vienne en appui radialement vers l'extérieur contre une surface interne correspondante (36) qui délimite un logement (26) dans lequel est reçu le bloc déformable (38) et qui est solidaire en rotation du pignon d'immobilisation (12).

## Description

La présente invention concerne un antivol de véhicule automobile comportant des moyens perfectionnés d'immobilisation.

La présente invention concerne plus particulièrement un antivol de véhicule automobile, du type dans lequel une colonne de direction de véhicule automobile comporte une roue dentée avec laquelle engrène un pignon d'immobilisation qui est monté à rotation autour d'une tige centrale, et du type dans lequel il est prévu un dispositif d'immobilisation du pignon en rotation autour de son axe pour assurer l'immobilisation de la colonne.

Dans un tel type d'antivol, il est apparu souhaitable que l'immobilisation du pignon se fasse non pas par un véritable blocage dans une position angulaire bien déterminée, mais plutôt sous la forme d'un freinage du pignon, quelle que soit sa position angulaire. Cela permet d'éviter que l'antivol puisse se trouver dans un état "armé" mais non verrouillé ainsi que cela peut se produire dans le cas d'un antivol de conception classique dans lequel un pêne est destiné à être reçu dans un logement formé par exemple dans la colonne de direction.

Par ailleurs, il est prévu que le couple de freinage du pignon en rotation soit limité à une valeur prédéterminée suffisante pour empêcher la conduite du véhicule automobile mais pas trop importante pour éviter qu'en tentant de forcer la colonne direction, un cambrioleur ne puisse casser l'antivol et rendre celui-ci inefficace.

L'invention a pour but de proposer une nouvelle conception des moyens d'immobilisation du pignon d'antivol qui permettent d'obtenir un couple d'immobilisation suffisamment important dans un encombrement minimal et à faible coût.

Dans ce but, l'invention propose un antivol de véhicule automobile, du type dans lequel une colonne de direction de véhicule automobile comporte une roue dentée avec laquelle engrène un pignon d'immobilisation qui est monté à rotation autour d'une tige centrale, et du type dans lequel il est prévu un dispositif d'immobilisation du pignon en rotation autour de son axe pour assurer l'immobilisation de la colonne, caractérisé en ce que le dispositif d'immobilisation comporte au moins un bloc déformable élastique de forme générale cylindrique et tubulaire qui est solidaire en rotation de la tige centrale et qui est susceptible d'être déformé sous l'effet d'un serrage selon sa direction axiale de telle sorte qu'une surface externe de révolution du bloc déformable vienne en appui radialement vers l'extérieur contre une surface interne correspondante qui délimite un logement dans lequel est reçu le bloc déformable et qui est solidaire en rotation du pignon d'immobilisation.

Selon d'autres caractéristiques de l'invention :
- le bloc déformable est réalisé dans une matière déformable et incompressible ;
- le bloc déformable est réalisé en matériau élastomère ;
- la tige centrale est immobilisée en rotation autour de son axe par rapport à un support de pignon ;
- le logement dans lequel est reçu le bloc déformable est aménagé dans le pignon, le logement est cylindrique et débouche dans une extrémité axiale du pignon, et il comporte une paroi transversale de fond annulaire qui forme une surface d'appui pour une première extrémité axiale du bloc déformable ;
- le dispositif d'immobilisation comporte une collerette de serrage qui est susceptible d'être commandée en déplacement axial par rapport au pignon et qui est en appui axialement contre une seconde extrémité axiale du bloc déformable ;
- la collerette est solidaire en rotation de la tige centrale ;
- le bloc déformable et la tige centrale coopèrent par des surfaces complémentaires munies de cannelures axiales ;
- une douille tubulaire axiale, munie de cannelures axiales agencées sur des surfaces cylindriques interne et externe, est interposée entre la tige centrale et une surface interne cannelée du bloc déformable ;
- la longueur axiale de la douille est inférieure à la longueur axiale du bloc déformable lorsqu'il est serré axialement ;
- le bloc déformable comporte une série d'anneaux déformables qui sont empilés axialement ; et
- les anneaux du bloc déformable sont séparés axialement l'un de l'autre par des flasques transversaux.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en perspective éclatée illustrant un antivol de colonne de direction conforme aux enseignements de l'invention ;
- les figures 2 et 3 sont des vues schématiques partielles en coupe axiale de l'antivol de la figure 1 représenté respectivement à l'état déverrouillé et à l'état verrouillé ;
- la figure 4 est une vue similaire à celle des figures 2 et 3 illustrant un second mode de réalisation de l'invention selon la ligne 4-4 de la figure 5, et
- la figure 5 est une vue en coupe selon la ligne 5-5 de la figure 4.

On a représenté sur les figures un antivol 10 pour une colonne de direction de véhicule automobile.

La colonne de direction (non représentée) comporte un arbre de direction qui est monté à rotation autour de son axe dans un tube de colonne.

L'antivol 10 représenté sur les figures est du type dans lequel un pignon 12 est monté à rotation autour d'un axe A1, parallèle à l'axe de la colonne, sur un support de pignon 14 qui présente sensiblement une forme de cadre et qui est mobile selon une direction longitudinale de translation perpendiculaire et tangente au tube de la colonne de direction.

Le pignon 12 est susceptible d'engrener avec une roue dentée qui est solidaire de l'arbre de colonne et il est prévu des moyens 16 qui permettent d'immobiliser en rotation le pignon 12 autour de son axe A1.

De la sorte, lorsque le pignon 12 est immobilisé en rotation et est engrené avec la roue dentée, la colonne de direction se trouve immobilisée, ce qui correspond à l'état verrouillé de l'antivol 10.

Au contraire, lorsque les moyens d'immobilisation 16 du pignon 12 en rotation sont désactivés, la colonne de direction se retrouve libre en rotation, ce qui correspond à l'état déverrouillé de l'antivol 10. On peut prévoir que le pignon 12 soit alors éloigné de la colonne par déplacement de son support 14.

Un antivol de ce type est plus particulièrement décrit dans la demande de brevet français No. 96 11566 à laquelle on se référera utilement pour connaître plus en détails la structure et le fonctionnement d'un tel antivol.

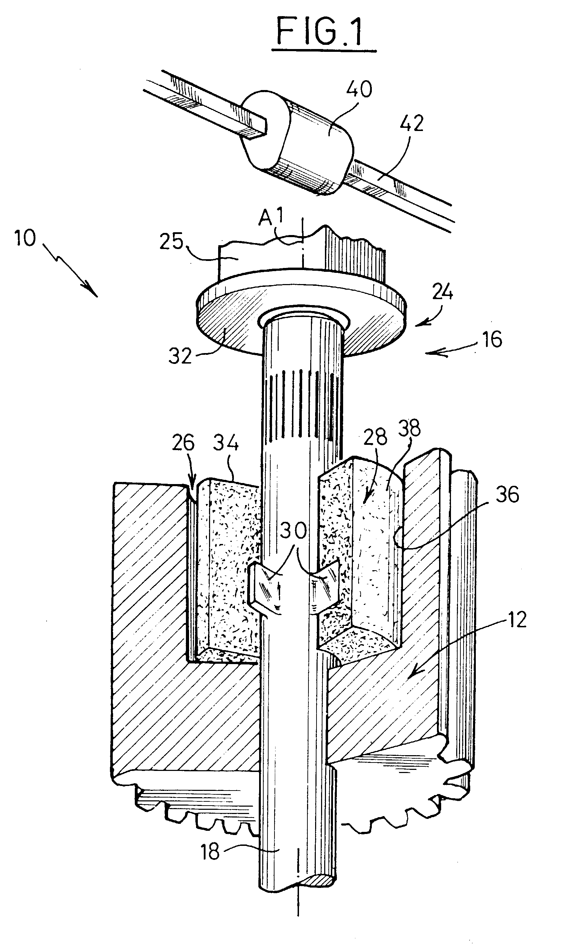

On a représenté sur les figures 1 à 3 un premier mode de réalisation simplifié des moyens d'immobilisation 16 du pignon 12.

Comme on peut le voir sur ces figures, le pignon 12 est monté à rotation sur une tige centrale 18 d'axe A1 dont une extrémité inférieure 20 est guidée dans une partie inférieure du support de pignon 14 en forme de cadre et dont une extrémité supérieure 22 moletée est liée en rotation, par exemple par emboîtement en force, avec un coulisseau 24 lui-même guidé en coulissement selon la direction de l'axe A1 dans une partie supérieure du support de pignon 14.

La tige centrale 18 est libre en rotation par rapport au support de pignon 14 et, dans le cas où elle est liée axialement au coulisseau 24, on prévoit qu'elle soit aussi libre en coulissement selon la direction axiale.

Le pignon 12, qui est traversé axialement par la tige centrale 18, comporte un logement 26 d'axe A1 qui débouche axialement vers le haut et qui est destiné à recevoir un bloc déformable élastique 28 en matériau élastomère. Le bloc déformable 28 est de forme générale cylindrique tubulaire et il est par exemple réalisé par surmoulage autour de la tige centrale 18. Le bloc 28 est par ailleurs solidaire en rotation de la tige centrale 18 par l'intermédiaire d'une série de dents 30 qui s'étendent radialement vers l'extérieur depuis la tige 18 de manière à empêcher toute rotation relative du bloc 28 par rapport à cette dernière.

Le coulisseau 24 comporte un corps principal 25 de section prismatique pour assurer son guidage selon la direction de l'axe A1 et, à une extrémité inférieure, une collerette annulaire 32 qui est destinée à venir en appui axialement vers le bas contre une face transversale supérieure annulaire 34 du bloc déformable 28. La collerette 32 présente un diamètre externe légèrement inférieur au diamètre du logement cylindrique 26 du pignon 12.

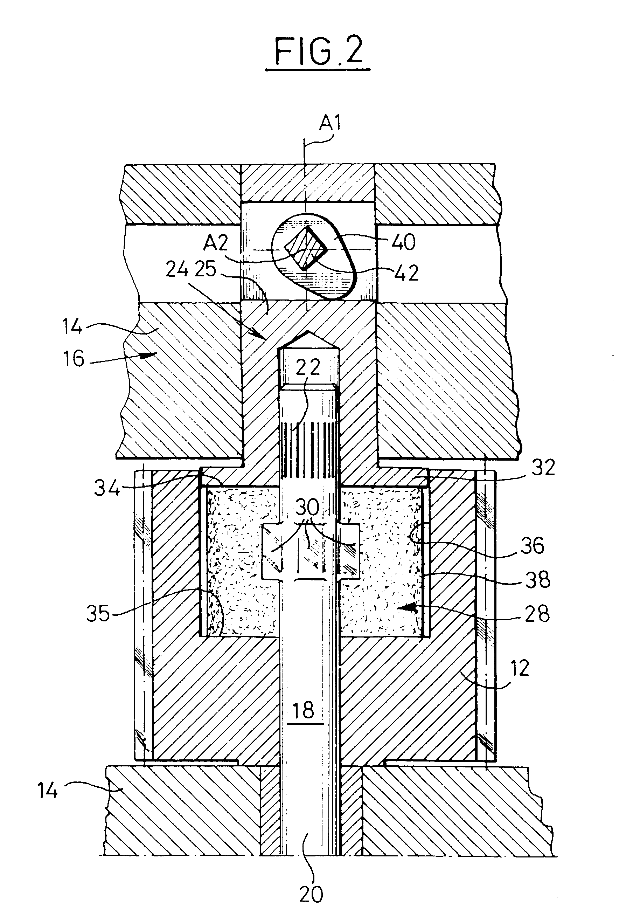

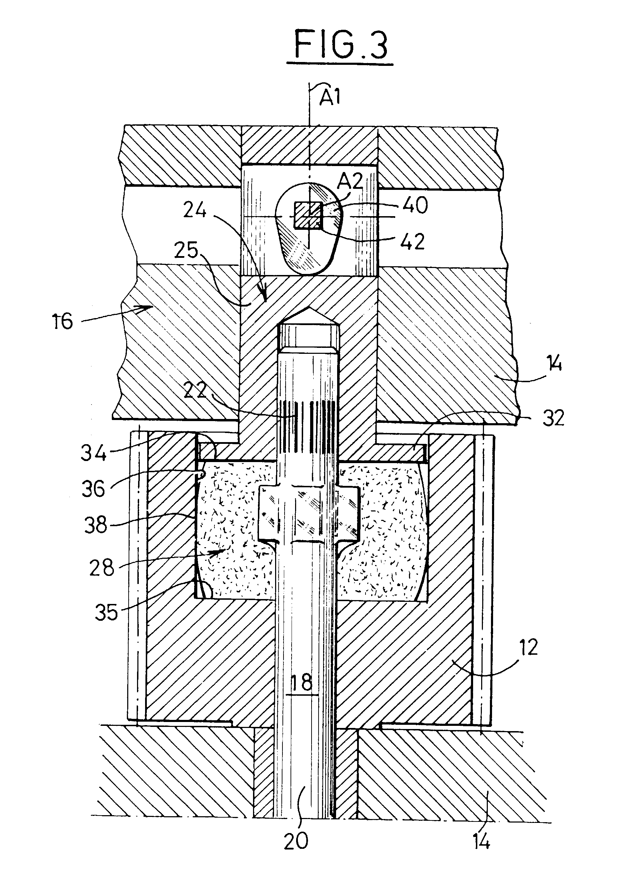

En effet, le coulisseau 24, qui forme ainsi un poussoir, est destiné à être commandé en translation selon l'axe A1 entre une position haute de déverrouillage représentée à la figure 2 et une position basse de verrouillage représentée à la figure 3. En position de verrouillage, le coulisseau 24 provoque le serrage axial du bloc 28 entre sa collerette 32, qui est reçue à l'intérieur du logement 26, et une paroi transversale inférieure annulaire 35 du logement 26 du pignon 12.

Le pignon 12 étant en appui axialement vers le bas contre son support 14, le déplacement axial du coulisseau 24 est intégralement transformé en un serrage du bloc déformable 28.

De préférence, le bloc 28 est déformable élastiquement mais il n'est pas compressible de sorte que le serrage axial ne se traduit pas par une diminution de son volume mais par une expansion selon la direction radiale.

De la sorte, le bloc 28, serré par le coulisseau 24, se déforme pour venir en appui radialement vers l'extérieur par une surface cylindrique externe 38 contre une surface cylindrique interne 36 du logement 26 du pignon 12.

En effet, comme on peut le voir à la figure 2, lorsque le bloc déformable 28 est à l'état libre, il est prévu un jeu radial entre la surface cylindrique externe 38 du bloc 28 et la surface cylindrique interne 36 du logement 26, afin que le dispositif d'immobilisation 16 n'entrave pas la rotation du pignon 12 lorsque l'antivol est dans son état déverrouillé.

Au contraire, comme on peut le voir à la figure 3, lorsque le coulisseau 24 est dans sa position basse de verrouillage, le bloc déformable 28 est en contact par sa surface externe 38 avec le pignon 12 et exerce sur ce dernier une action de freinage l'empêchant de tourner autour de l'axe A1. En effet, le bloc déformable 28 est immobilisé en rotation tant par son contact avec la collerette annulaire 32 du coulisseau 24 que par sa liaison avec la tige centrale 18 qui est elle-même immobilisée en rotation par son montage serré dans le coulisseau 24.

Bien entendu, en fonction du serrage axial, c'est-à-dire en fonction du déplacement du coulisseau 24, le couple des forces de frottement exercées par le bloc 28 sur le pignon 12 varie, de sorte qu'il est possible de déterminer avec précision une valeur de couple au-delà de laquelle il y aura glissement au niveau de la liaison entre le bloc 28 et le pignon 12.

De la sorte, un cambrioleur qui exercerait sur le volant du véhicule un effort en vue de faire rompre l'antivol n'aurait d'autre résultat que de parvenir à un léger braquage des roues du véhicule, au prix d'un effort incompatible avec une conduite normale du véhicule.

Bien entendu la valeur du couple résistant offert par l'antivol 10 dépend de divers paramètres, et notamment de la géométrie des pièces, de la nature de leurs matériaux et des états de surface des surfaces cylindriques en contact 36, 38 du pignon 12 et du bloc déformable 28.

A titre d'exemple, le coulisseau 24 est ici commandé entre ses positions haute et basse par une came rotative 40 entraînée par un arbre de commande 42 d'axe A2 perpendiculaire à l'axe A1. Bien entendu, l'invention est aussi susceptible d'être mise en oeuvre avec tout type d'actionneur apte à commander le coulisseau 24 selon la direction de l'axe A1.

Pour déverrouiller l'antivol 10, il suffit de commander la came 40 de manière à ce qu'elle permette la remontée du coulisseau 24 vers sa position haute représentée à la figure 2 sous le seul effet de l'élasticité du bloc déformable 28. En effet, en reprenant sa forme initiale, le bloc 28 repousse la collerette 32 vers le haut et le contact du bloc 28 avec la surface cylindrique interne 36 du logement 26 du pignon 12 se trouve supprimé. Le pignon 12 est alors de nouveau libre en rotation autour de son axe et l'antivol est ainsi déverrouillé.

Avantageusement, on peut déterminer le profil de la came 40 et commander la rotation de son arbre d'entraînement 42 de manière à piloter précisément la remontée du coulisseau 24 afin de ne libérer que progressivement la rotation du pignon 12. On peut notamment ainsi éviter toute rotation brusque du volant du véhicule qui pourrait survenir au moment du déverrouillage de l'antivol 10, comme cela peut se produire par exemple lorsqu'une des roues directrice est en appui contre une bordure de trottoir.

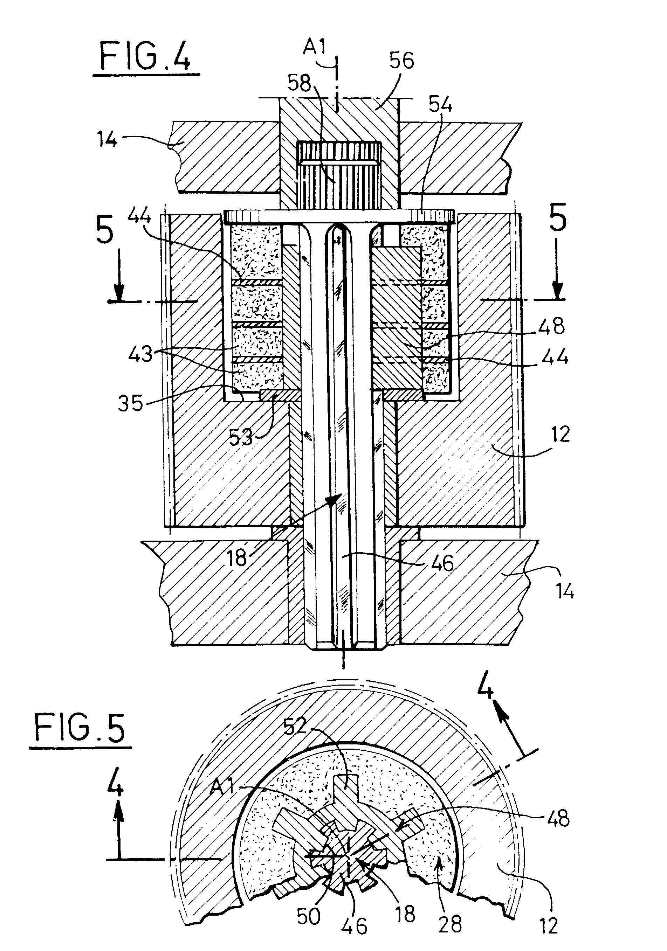

On a représenté sur les figures 4 et 5 un second mode de réalisation des moyens d'immobilisation 16 du pignon 12 selon l'invention.

Ce second mode de réalisation se différencie du premier tout d'abord par le fait que le bloc déformable 28 est réalisé sous la forme de plusieurs anneaux 43 indépendants qui sont empilés axialement les uns sur les autres avec interposition entre deux anneaux 43 consécutifs d'un flasque annulaire 44 réalisé par exemple en métal ou en ou en matériau plastique rigide. Dans l'exemple de réalisation représenté, il est prévu quatre anneaux 43 mais, en fonction de la valeur du couple transmissible que l'on veut obtenir, ce nombre peut être inférieur ou supérieur.

Cette conception du bloc déformable 28 permet d'obtenir, à effort de serrage égal, une valeur du couple de frottement entre le bloc 28 et le pignon 12 qui est supérieure à celle obtenue avec un bloc en une seule pièce. En effet, lorsqu'il est comprimé axialement, un bloc annulaire cylindrique tend à présenter une surface externe qui bombée à la manière de celle d'un tonneau, l'expansion radiale étant maximale à mi-hauteur du bloc et minimale à ses extrémités axiales. De la sorte, la répartition de la pression de contact entre le bloc déformable et le pignon 12 n'est pas optimale sur toute la longueur axiale de leur contact, au détriment du couple transmissible par une telle liaison.

Au contraire, en divisant le bloc déformable 28 en plusieurs anneaux 43, cette répartition se trouve grandement améliorée du fait que la hauteur moins importante de chaque anneau 43 limite l'effet de bombé lors du serrage.

Selon un autre aspect de ce second mode de réalisation de l'invention, le bloc déformable 28 n'est pas lié directement à la tige centrale 18.

En effet, la tige centrale 18 présente un tronçon inférieur 46 qui est muni, sur toute sa longueur, de cannelures axiales. Sur ce tronçon cannelé 46, qui traverse le pignon 12 de part en part, est montée une douille cylindrique tubulaire 48 qui est pourvue, sur une surface interne, de cannelures axiales 50 complémentaires de celles de la tige centrale 18 de manière à pouvoir coulisser librement le long de cette dernière tout en étant liée en rotation à la tige 18. La douille 48, qui est interposée radialement entre le bloc 28 et la tige 18, est aussi munie, sur sa surface externe, de cannelures axiales 52 qui, à l'instar des dents 30 de la tige du premier mode de réalisation, permettent de rendre chacun des anneaux 43 du bloc déformable 28 solidaire en rotation de la douille 48 et, par conséquent, de la tige centrale 18.

Comme on peut le voir sur la figure 4, la longueur axiale de la douille 48 est inférieure à celle du bloc 28 lorsqu'il est serré axialement au maximum et les anneaux 43 peuvent coulisser axialement par rapport à la douille 48.

L'avantage de cette conception est de permettre aux anneaux 43 de pouvoir coulisser axialement par rapport à la tige centrale 18, afin d'autoriser des déplacements différentiels de chaque anneau 43 par rapport à la tige 18 lorsque le bloc 28 est comprimé axialement, et ainsi d'éviter tout risque de déchirement par cisaillement axial au niveau de l'interface entre le bloc déformable et la tige centrale 18.

Par ailleurs, l'interposition des flasques 44 entre deux anneaux 43 consécutifs permet de limiter les risques de cisaillement en torsion du bloc déformable 28, notamment si l'on prévoit de les rendre immobiles en rotation par rapport à la tige 18. A cet effet, un bord périphérique intérieur des flasques annulaires 44 est de préférence cannelé pour coopérer avec les cannelures externes 52 de la douille 48.

De plus, on a interposé une rondelle antifriction 53 entre la face transversale annulaire 35 du logement 26 et les extrémités axiales inférieures de la douille 48 et du bloc déformable 28, au moins sur une partie radiale interne de ce dernier. Cela permet de minimiser les frottements susceptibles de s'opposer à une libre rotation du pignon 12 lorsque le l'antivol 10 est dans son état déverrouillé.

Enfin, selon un autre aspect particulier de ce second mode de réalisation de l'invention, le coulisseau se présente sous la forme d'un corps de forme prismatique 56 qui est guidé axialement par rapport au support de pignon 14 et qui est emmanché en force sur une extrémité axiale supérieure 58 de la tige centrale 18 de manière à être solidaire de celle-ci.

Par ailleurs, la tige 18 comporte une collerette 54 qui est agencée axialement entre le tronçon cannelé 46 et l'extrémité supérieure 58 et qui est ainsi réalisée venue de matière avec la tige 18.

Bien entendu, la collerette 54, sur laquelle le coulisseau 56 est en appui axialement vers le bas, est d'un diamètre légèrement inférieur à celui du logement 26 du pignon 12 et elle est destinée à venir en appui contre celui des anneaux 43 qui est agencé le plus haut dans l'empilement formant le bloc déformable 28.

De plus, comme dans le premier mode de réalisation de l'invention, le coulisseau 56 coopère avec des moyens d'actionnement (non représentés) qui permettent de déplacer l'ensemble de la tige centrale 18 entre une position haute de déverrouillage et une position basse de verrouillage.

## Revendications

1. Antivol de véhicule automobile, du type dans lequel une colonne de direction de véhicule automobile comporte une roue dentée avec laquelle engrène un pignon d'immobilisation (12) qui est monté à rotation autour d'une tige centrale (18), et du type dans lequel il est prévu un dispositif d'immobilisation (16) du pignon (12) en rotation autour de son axe (A1) pour assurer l'immobilisation de la colonne,
caractérisé en ce que le dispositif d'immobilisation (16) comporte au moins un bloc déformable élastique (28) de forme générale cylindrique et tubulaire qui est solidaire en rotation de la tige centrale (18) et qui est susceptible d'être déformé sous l'effet d'un serrage selon sa direction axiale de telle sorte qu'une surface externe de révolution (38) du bloc déformable (28) vienne en appui radialement vers l'extérieur contre une surface interne correspondante (36) qui délimite un logement (26) dans lequel est reçu le bloc déformable (38) et qui est solidaire en rotation du pignon d'immobilisation (12).

2. Antivol selon la revendication 1, caractérisé en ce que le bloc déformable (28) est réalisé dans une matière déformable et incompressible.

3. Antivol selon la revendication 2, caractérisé en ce que le bloc déformable (28) est réalisé en matériau élastomère.

4. Antivol selon l'une quelconque des revendications précédentes, caractérisé en ce que la tige centrale (18) est immobilisée en rotation autour de son axe (A1) par rapport à un support de pignon (14).

5. Antivol selon l'une quelconque des revendications précédentes, caractérisé en ce que le logement (26) dans lequel est reçu le bloc déformable (28) est aménagé dans le pignon (12), en ce que le logement (26) est cylindrique et débouche dans une extrémité axiale du pignon (12), et en ce qu'il comporte une paroi transversale de fond annulaire (35) qui forme une surface d'appui pour une première extrémité axiale du bloc déformable (28).

6. Antivol selon l'une quelconque des revendications précédentes, caractérisé en ce que le dispositif d'immobilisation (16) comporte une collerette de serrage (32) qui est susceptible d'être commandée en déplacement axial par rapport au pignon (12) et qui est en appui axialement contre une seconde extrémité axiale du bloc déformable (28).

7. Antivol selon la revendication 6, caractérisé en ce que la collerette (32) est solidaire en rotation de la tige centrale (18).

8. Antivol selon l'une quelconque des revendications précédentes prise en combinaison avec la revendication 4, caractérisé en ce que le bloc déformable (28) et la tige centrale (18) coopèrent par des surfaces complémentaires munies de cannelures axiales.

9. Antivol selon la revendication 8, caractérisé en ce qu'une douille tubulaire axiale (48), munie de cannelures axiales (50, 52) agencées sur des surfaces cylindriques interne et externe, est interposée entre la tige centrale (18) et une surface interne cannelée du bloc déformable (28).

10. Antivol selon la revendication 9, caractérisé en ce que la longueur axiale de la douille (48) est inférieure à la longueur axiale du bloc déformable (28) lorsqu'il est serré axialement.

11. Antivol selon l'une quelconque des revendications précédentes, caractérisé en ce que le bloc déformable (28) comporte une série d'anneaux déformables (43) qui sont empilés axialement.

12. Antivol selon la revendication 11, caractérisé en ce que les anneaux (43) du bloc déformable (28) sont séparés axialement l'un de l'autre par des flasques transversaux.
